## Europäisches Patentamt

## European Patent Office

## Office européen des brevets

(11) Veröffentlichungsnummer: **0 203 476**
**B1**

(12) **EUROPÄISCHE PATENTSCHRIFT**

(45) Veröffentlichungstag der Patentschrift:
**25.04.90**

(21) Anmeldenummer: **86106664.5**

(22) Anmeldetag: **15.05.86**

(51) Int. Cl.⁴: **H04M 1/02**

(54) **Fernsprechgerät für Tisch- und Wandbetrieb.**

(30) Priorität: **21.05.85 DE 3518250**

(43) Veröffentlichungstag der Anmeldung:
**03.12.86 Patentblatt 86/49**

(45) Bekanntmachung des Hinweises auf die Patenterteilung:
**25.04.90 Patentblatt 90/17**

(84) Benannte Vertragsstaaten:
**AT BE DE GB IT NL**

(56) Entgegenhaltungen:
**DE-A- 3 207 824**
**DE-B- 2 920 286**
**US-A- 4 395 591**

(73) Patentinhaber: **Siemens Aktiengesellschaft,**
**Wittelsbacherplatz 2, D-8000 München 2(DE)**

(72) Erfinder: **Blöchl, Franz, Dipl.-Ing., Carl-Isert-Weg 3,**
**D-4290 Bocholt(DE)**
Erfinder: **Reuschel, Jürgen, Carl-Isert-Weg 5,**
**D-4290 Bocholt(DE)**

## Beschreibung

Die vorliegende Erfindung beinhaltet ein Fernsprechgerät für Tisch- und Wandbetrieb mit zumindest einer im stationären Gehäuseteil an dessen Außenfläche vorgesehenen Ablagemulde für einen Handapparat, wobei im Bereich dieser Ablagemulde ein Füllkörper in eine Aufnahme und einen Ausschnitt einlegbar und befestigbar ist, wobei der Füllkörper bei Verwendung des Fernsprechgerätes als Tischgerät mit der Ablagemulde bündig abschließt, während eine einstückig mit ihm verbundene Nase bei Verwendung des Fernsprechgerätes als Wandgerät die Konturen der Ablagemulde überragt und in eine Aufnahme am Handapparat eingreift, wobei ferner ein frei zugänglicher Ausschnitt bei Wandbetrieb des Fernsprechgerätes im tiefsten Punkt des die Auflage für den Handapparat bildenden Randbereiches der Ablagemulde vorgesehen ist.

Bei Fernsprechern, die sowohl in horizontaler als auch in vertikaler Betriebslage als Tisch- wie auch als Wandgerät benutzbar sein sollen, ergibt sich für die optimale Gestaltung des Auflagebereiches für den Handapparat auf dem Gehäuse des stationären Gehäuseteils ein Problem aus der in beiden Betriebslagen unterschiedlichen Angriffsrichtung der Schwerkraft am Handapparat. Der Handapparat soll in beiden Betriebslagen des Fernsprechgerätes jeweils stoßfest in der Mulde des Gehäuseteils aufgenommen sein und unter der Einwirkung der Schwerkraft das mechanische Betätigungselement des Gabelumschalters gegen dessen elastische Vorspannung mit Sicherheit ausgelenkt halten. Die Ruhelage des Handapparates auf dem Gehäuseteil soll in beiden Betriebslagen des Gerätes auf einfache Weise herbeiführbar sein, der Handapparat soll sich andererseits in beiden Betriebslagen des Gerätes ohne Behinderung abheben lassen.

So ist es beispielsweise bekannt, ein Gerätemodell je nach vorgesehener Betriebslage mit einer von zwei verschieden gestalteten Gehäusekappen zu versehen. Der Unterschied der beiden Gehäusekappen braucht ausschließlich den Bereich der Handapparatemulde zu betreffen und kann dort z.B. durch einen mehr oder weniger weit vorstehenden starren Kragen am Rand der Ablagemulde in Erscheinung treten.

Eine für den Wandbetrieb optimal gestaltete Gehäusekappe kann bei irrtümlicher Verwendung dieser Kappe für ein Tischgerät das Abheben des Handapparates durch die unstimmige Zugriffsrichtung wesentlich erschweren und dazu führen, daß bei raschem Abheben der stationäre Geräteteil mit hochgerissen wird, da die Standfestigkeit des Tischgerätes ausschließlich vom Eigengewicht des Gerätes selbst abhängt, während sie beim Wandgerät durch die den stationären Geräteteil mit der Wand verbindenden Befestigungselemente gegeben ist. Die Verwendung des für ein Tischgerät bestimmten Gehäusemodells bei einem Wandfernsprecher kann dagegen eine nicht ausreichend sichere Lage des Handapparates in der Mulde und eine unbefriedigende Betätigung des Gabelumschalters zur Folge haben.

Eine günstigere Lösung des Problems wird durch Verwendung eines Füllkörpers erreicht, der je nach Verwendung des Fernsprechgerätes als Tisch- oder Wandgerät in zwei Einbaulagen im Bereich der Ablagemulde befestigt wird.

So ist aus der DE-OS 3 207 824 ein Füllkörper im Inneren des Fernsprechgerätes vorgesehen, der sich einmal bei Tischbetrieb des Fernsprechgerätes an die Konturen der Ablagemulde anpaßt, während er bei Wandbetrieb des Fernsprechgerätes mit einer Nase eine Ausnehmung in demjenigen Randbereich der Ablagemulde durchgreift, der die Auflage für den Handapparat bildet.

Bei dieser bekannten Ausführungsform ist es einmal als nachteilig anzusehen, daß der Füllkörper mit dem Fernsprechgerät verschraubt ist, so daß zum Lösen der Verbindung jeweils ein Werkzeug in Form eines Schraubendrehers erforderlich ist. Ein weiterer Nachteil besteht darin, daß ein Wechsel der Einbaulage des Füllkörpers jeweils ein zusätzliches Öffnen und nach erfolgtem Umbau ein erneutes Verschließen des Fernsprechgerätes bedingt.

Dieser letztgenannte Nachteil tritt bei einem Fernsprechgerät nicht auf, das durch die US-A 4 395 591 bekannt geworden ist. Bei diesem Fernsprechgerät befindet sich im Bereich der Ablagemulde sowie ein Ausschnitt, in die bei Verwendung des Fernsprechgerätes als Tischgerät der Füllkörper mit seiner winklig an ihm angebrachten Nase eingelegt wird. Anschließend wird der Füllkörper mit dem Fernsprechgerät verschraubt. Zur Abdeckung der Schraube werden zusätzlich streifen- und kappenförmige Elemente verwendet.

Bei Verwendung des Fernsprechgerätes als Wandgerät wird der Füllkörper um 180° in bezug auf die Ablagemulde spiegelbildlich gewendet, so daß die Nase in die Ablagemulde hineinragt und in eine Ausnehmung im Hörbereich des Handapparates eingreift.

Hierbei muß es als nachteilig erachtet werden, daß zum Wechsel der Einbaulage des Füllkörpers zunächst die streifen- und kappenförmigen Elemente entfernt sowie die Schraube gelöst werden müssen, wobei die Befestigung und Abdeckung des Füllkörpers wiederum in umgekehrter Reihenfolge vorgenommen werden muß. Ein derartiger Wechsel erfordert somit einen nicht unerheblichen Zeit- und Arbeitsaufwand.

Durch die DE-Bl 2 920 286 ist weiterhin ein Fernsprechgerät bekannt, bei dem bei seiner Verwendung als Wandgerät eine Befestigungsschraube eine Öffnung in der Bodenwanne des Fernsprechgerätes durchgreift. Diese Schraube verschwenkt entgegen Federkraft einen im Inneren des Fernsprechgerätes angeordneten und schwenkbar gelagerten winkelförmigen Hebel, der mit einem an einem Hebelende angeordneten Formelement einen Durchbruch im Bereich der Hörermulde durchgreift. Dieses Formelement greift wiederum in eine Öffnung des Handapparates ein.

Bei Verwendung dieses Fernsprechgerätes als Tischgerät wird der winkelförmige Hebel durch die Kraft der Feder in seine Ausgangslage zurückgeschwenkt, wobei das Formelement soweit aus dem Durchbruch im Bereich der Ablagemulde für den Hörer herausgeschwenkt wird, daß das Formelement mit der Ablagemulde in etwa bündig abschließt.

Der Erfindung liegt daher die Aufgabe zugrunde, eine Lösung für das Umrüsten eines Fernsprechers auf zwei Betriebslagen anzugeben, die vom Teilnehmer selbst jederzeit auf einfache Weise durchgeführt werden kann.

Diese Aufgabe wird dadurch gelöst, daß der Füllkörper in den Ausschnitt durch Drehung um 180° parallel zur Ablagemulde in zwei Gebrauchslagen eindrückbar und mittels einer Rastverbindung gehalten ist, wobei zwei sich gegenüberliegende Seitenwände des Ausschnittes über einen Steg miteinander verbunden sind, der von den zueinander weisenden freien und voneinander beabstandeten Enden des einen doppel-U-förmigen Querschnitt besitzenden Füllkörpers spielfrei untergriffen wird.

Eine derartige konstruktive Gestaltung des Ausschnittes und des Füllkörpers hat den Vorteil, daß der Füllkörper jederzeit ohne Zuhilfenahme von speziellen Werkzeugen vom Teilnehmer entrastet, in die gewünschte Gebrauchslage gedreht und anschließend wieder in den Ausschnitt eingedrückt werden kann. Somit können auch zusätzliche Befestigungs- und Abdeckelemente entfallen, wodurch der Umrüstvorgang schnell und einfach zu vollziehen ist.

Dabei können an den Seitenwänden des Ausschnittes kurze mit den Seitenwänden einstückig verbundene und in den Ausschnitt hineinragende Ansätze vorgesehen sein, die als Führung und Auflage für den Füllkörper dienen.

Die Erfindung soll im folgenden anhand eines Ausführungsbeispiels erläutert werden. Es zeigt

Fig. 1 eine Aufsicht auf einen Ausschnitt eines Fernsprechgerätes im Bereich der Ablagemulde für den Handapparat, wobei der Füllkörper nicht eingebracht ist,

Fig. 2 den gleichen Ausschnitt des als Wandgerät verwendbaren Fernsprechgerätes mit eingesetztem Füllkörper,

Fig. 3 den gleichen Ausschnitt des als Tischgerät verwendbaren Fernsprechgerätes mit eingesetztem Füllkörper,

Fig. 4 den Füllkörper in einer geschnittenen Seitenansicht.

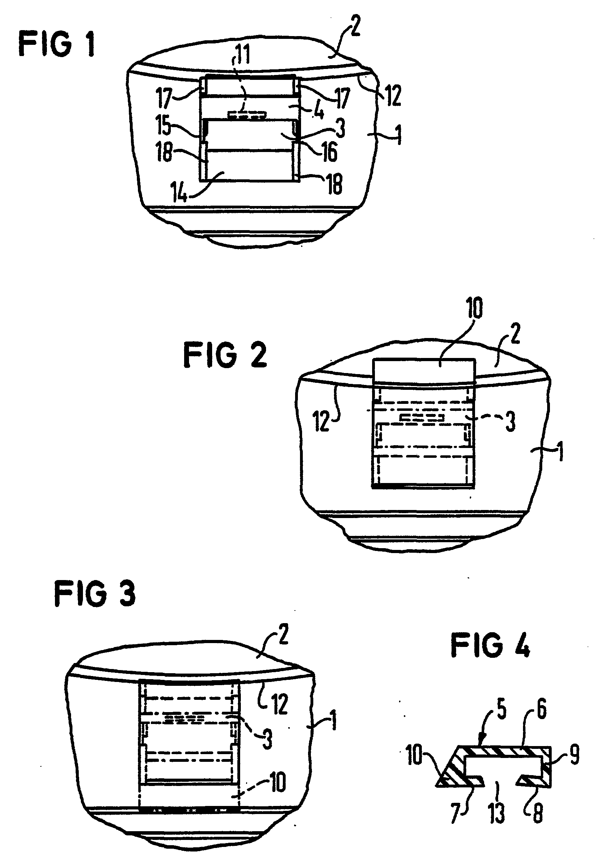

Das in den Figuren gezeigte Fernsprechgerät 1 weist im Randbereich einer Ablagemulde 2 für den hier nicht dargestellten Handapparat einen Ausschnitt 3 auf. Wie aus der Fig. 1 erkennbar ist, ist innerhalb dieses Ausschnittes 3 ein zwei Seitenwände 15 und 16 verbindender Steg 4 angeordnet. In seinem dem Inneren des Fernsprechgerätes 1 zugewandten Bereich weist dieser Steg 4 einen einstückig mit ihm verbundenen Anschlag 11 auf.

Der Ausschnitt 3 dient zur rastbaren Aufnahme eines Füllkörpers 5. Durch den Füllkörper soll ermöglicht werden, das Fernsprechgerät wahlweise als Tischgerät oder Wandgerät zu benutzen. Etwa der Stärke des Füllkörpers 5 zum Innenraum des Fernsprechgerätes 1 versetzt verbindet ein weiterer Quersteg 14 U-förmigen Querschnitts diese beiden Seitenwände 15 und 16 des Ausschnittes 3. In der Ebene des Steges 3 befinden sich außerdem im Bereich der Seitenwände 15 und 16 des Ausschnittes Ansätze 17 und 18, die zur Führung und Auflage des eingedrückten Füllkörpers dienen.

Der Füllkörper 5 (Fig. 4) weist einen Doppel U-förmigen Querschnitt auf. Zur Basis 6 des Füllkörpers 5 sind die beiden mit Abstand in etwa parallel zu ihr verlaufenden und einstückig mit ihr verbundenen freien Enden 7 und 8 angeordnet. Während das freie Ende 8 mit der Basis 6 über einen rechtwinklig zur Basis verlaufenden Zwischenbereich 9 verbunden ist, ist der die Basis 6 und das freie Ende 7 verbindende Zwischenbereich als keilförmig auslaufende Nase 10 gestaltet. Die lichte Weite zwischen den freien Enden 7 und 8 ist dabei etwas größer als die Breite des Steges 4.

In Fig. 2 ist, wie oben erwähnt, die Lage des Füllkörpers 5 dargestellt, in der das Fernsprechgerät als Wandgerät zur sicheren Aufnahme des Handapparates verwendbar ist. In diesem Fall überragt die Nase 10 des Füllkörpers 5 den Randbereich 12 der Ablagemulde 2. Die Nase 10 greift dabei in eine formmäßig in etwa entsprechende Ausnehmung im Handapparat z. B. in dessen Hörbereich ein und verhindert somit ein unerwünschtes Herausgleiten des Handapparates aus der Ablagemulde 2 des Fernsprechgerätes 1.

Bei der in Fig. 3 dargestellten Lage des Füllkörpers schließt der Zwischenbereich 9 glatt mit den Konturen des Randbereiches 12 der Ablagemulde ab, so daß der Handapparat bei der Verwendung des Fernsprechgerätes 1 als Tischgerät ohne störende Vorsprünge in die dafür vorgesehene Ablagemulde abgelegt bzw. aus ihr entnommen werden kann.

Der Füllkörper 5 ist innerhalb des Ausschnittes verrastet. Diese Rastverbindung wird jeweils durch die den Steg 4 untergreifenden freien Enden 7 bzw. 8 bewirkt. Dabei lassen sich die Abzugskräfte zum Entfernen des Füllkörpers 5 noch dadurch erhöhen, daß die freien Enden 7 bzw. 8 jeweils leicht geneigt zur Basis 6 verlaufen. Für den jeweiligen Verwendungsfall des Fernsprechgerätes als Tisch- oder Wandgerät kann der im Ausschnitt 3 verrastete Füllkörper 5 mittels eines einfachen Werkzeuges z. B. mittels einer Büroklammer schnell soweit aus dem Ausschnitt in Richtung auf die Ablagemulde 2 gedrückt werden, bis die Rastverbindung gelöst ist. Durch Herausnahme des Füllkörpers 5 aus dem Ausschnitt 3 und anschließendes Drehen um 180° kann der Füllkörper zu seinem gewünschten Verwendungszweck ohne Zuhilfenahme von Werkzeugen in den Ausschnitt 3 eingedrückt werden. Dabei dient der Ansatz II jeweils als Anschlag für die freien Enden 7 und 8 des Füllkörpers 5.

## Patentansprüche

1. Fernsprechgerät (1) für Tisch- und Wandbetrieb mit zumindest einer im stationären Gehäuseteil an dessen Außenfläche vorgesehenen Ablagemulde (2) für einen Handapparat, wobei im Bereich dieser Ablagemulde (2) ein Füllkörper (5) in eine Aufnahme und einen Ausschnitt einlegbar und befestigbar ist, wobei der Füllkörper (5) bei Verwendung des Fernsprechgerätes (1) als Tischgerät mit der Ablagemulde (2) bündig abschließt, während eine einstückig mit ihm verbundene Nase (10) bei Verwendung des Fernsprechgerätes (1) als Wandgerät die Konturen der Ablagemulde (2) überragt und in eine Aufnahme am Handapparat eingreift, wobei ferner ein frei zugänglicher Ausschnitt (3) bei Wandbetrieb des Fernsprechgerätes (1) im tiefsten Punkt des die Auflage für den Handapparat bildenden Randbereiches (12) der Ablagemulde (2) vorgesehen ist, dadurch gekennzeichnet, daß der Füllkörper (5) in den Ausschnitt (3) durch Drehung um 180° parallel zur Ablagemulde in zwei Gebrauchslagen eindrückbar und mittels einer Rastverbindung gehalten ist, wobei sich zwei gegenüberliegende Seitenwände (15, 16) des Ausschnittes (3) über einen Steg (4) miteinander verbunden sind, der von den zueinander weisenden freien und voneinander beabstandeten Enden (7, 8) des einen doppel-U-förmigen Querschnitt besitzenden Füllkörpers (5) spielfrei untergriffen wird.

2. Fernsprechgerät nach Anspruch 1, dadurch gekennzeichnet, daß mit den genannten Seitenwänden (15, 16) des Ausschnittes (3) kurze, in den Ausschnitt (3) hineinragende Ansätze (17, 18) einstückig verbunden sind.

3. Fernsprechgerät nach Anspruch 1, dadurch gekennzeichnet, daß die freien Enden (7, 8) des Füllkörpers (5) zu dessen Basis (6) geringfügig geneigt angeordnet sind.

4. Fernsprechgerät nach Anspruch 1, dadurch gekennzeichnet, daß der Steg (4) einen in den Innenraum des Fernsprechgerätes (1) weisenden Anschlag (11) aufweist.

## Claims

1. Telephone set (1) for table and wall operation having at least one handset cradle (2) provided in the stationary housing part on the outer surface of the latter, it being possible to insert and secure a filler body (5) in a recess and a cut-out in the region of this cradle (2), the filler body (5), when the telephone set (1) is used as a table set, being flush with the cradle (2) while a projection (10) connected integrally to the set projects, when the telephone set (1) is used as a wall-mounted set, beyond the contours of the cradle (2) and engages in a recess on the handset, a freely accessible cut-out (3) being provided, in the case of wall-mounted operation of the telephone set (1), at the lowest point of the edge zone (12) of the cradle (2) which forms the rest for the handset, characterized in that the filler body (5) can be inserted into the cut-out (3) in two positions of use by means of a rotation through 180° parallel to the cradle and held in place by means of a catch connection, two sidewalls (15, 16) of the cut-out (3) located opposite one another being connected to one another via a bridge (4) below which the free ends (7, 8), pointing towards one another and at a distance from one another, of the filler body (5) having a double U-shaped cross-section engage securely.

2. Telephone set according to Claim 1, characterized in that short attachments (17, 18) are connected integrally to the mentioned sidewalls (15, 16) of the cut-out (3), said attachments projecting into the cut-out (3).

3. Telephone set according to Claim 1, characterized in that the free ends (7, 8) of the filler body (5) are arranged slightly inclined to the base (6) of the latter.

4. Telephone set according to Claim 1, characterized in that the bridge (4) has a stop (11) pointing towards the interior of the telephone set (1).

## Revendications

1. Appareil téléphonique (1) destiné à fonctionner en étant placé sur une table ou accroché à un mur, comportant au moins une console de support en forme d'auge (2) prévue dans la partie fixe du boîtier, sur la surface extérieure de ce dernier, pour un combiné, et dans lequel au voisinage de cette console de support (2) un corps de remplissage (5) peut être inséré et fixé dans un logement et dans une découpe, et dans lequel le corps de remplissage (5) se termine de niveau avec la console de support (2) dans le cas de l'utilisation de l'appareil téléphonique (1) en tant qu'appareil de table, tandis qu'un bec (10), solidaire du corps fait saillie au-delà des contours de la console de support (2) dans le cas de l'utilisation de l'appareil téléphonique (1) comme appareil mural et s'engage dans un logement ménagé dans le combiné, et dans lequel en outre, dans le cas où l'appareil téléphonique (1) peut être utilisé en étant accroché au mur, une découpe (3) librement accessible est prévue au niveau du point le plus bas de la zone marginale (12) de la console de support (2), qui constitue le support prévu pour le combiné, caractérisé par le fait que le corps de remplissage peut être enfoncé dans la découpe (3) au moyen d'une rotation sur 180° parallèlement à la console de support, dans deux positions d'utilisation et y être maintenu à l'aide d'un système de liaison à encliquetage, les deux parois latérales opposées (15, 16) de la découpe (3) étant reliées entre elles par l'intermédiaire d'une barrette (4), au-dessous de laquelle s'engagent sans jeu les extrémités libres (7, 8), qui sont tournées l'une vers l'autre tout en étant espacées, du corps de remplissage (5) possédant une section transversale en forme de U double.

2. Appareil téléphonique suivant la revendication 1, caractérisé par le fait que deux courts appendices saillants (17, 18), qui pénètrent dans la découpe (3), sont réunis d'un seul tenant auxdites parois latérales (15, 16) de la découpe (3).

3. Appareil téléphonique suivant la revendication 1, caractérisé par le fait que les extrémités libres (7, 8) du corps de remplissage (5) sont disposées en étant légèrement inclinées par rapport à la base (6) de ce dernier.

4. Appareil téléphonique suivant la revendication 1, caractérisé par le fait que la barrette (4) possède une butée (11) dirigée vers l'espace intérieur de l'appareil téléphonique (1).

FIG 1

FIG 2

FIG 3

FIG 4